## Europäisches Patentamt
## European Patent Office
## Office européen des brevets

(11) Numéro de publication: **0 022 270**
**B1**

(12) **FASCICULE DE BREVET EUROPEEN**

(45) Date de publication du fascicule du brevet: **19.09.84**

(51) Int. Cl.³: **G 04 C 3/14, H 02 P 8/00**

(21) Numéro de dépôt: **80103854.8**

(22) Date de dépôt: **07.07.80**

(54) Détecteur de position d'un moteur pas à pas.

| | |
|---|---|
| (30) Priorité: **09.07.79 FR 7918170** | (73) Titulaire: **SOCIETE SUISSE POUR L'INDUSTRIE HORLOGERE MANAGEMENT SERVICES S.A.**<br>**Rue Stämpfli 96**<br>**CH-2500 Bienne (CH)** |
| (43) Date de publication de la demande:<br>**14.01.81 Bulletin 81/02** | |
| (45) Mention de la délivrance du brevet:<br>**19.09.84 Bulletin 84/38** | (72) Inventeur: **Tu Xuan, Mai**<br>**Rue Blancherie 18**<br>**CH-1022 Chavannes (CH)** |
| (84) Etats contractants désignés:<br>**CH DE GB IT LI** | (74) Mandataire: **Coutts, William Robert et al**<br>**SSIH Management Services S.A. Patent Service**<br>**Rue Stämpfli 96**<br>**CH-2500 Bienne (CH)** |
| (56) Documents cités:<br>**FR-A-2 384 289**<br>**FR-A-2 388 323**<br>**GB-A-2 006 995**<br>**GB-A-2 009 464**<br>**US-A-4 158 287** | |
| **Le dossier contient des informations techniques présentées postérieurement au dépôt de la demande et ne figurant pas dans le présent fascicule.** | |

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

## Description

La présente invention a pour objet un dispositif d'alimentation d'un moteur pas à pas monophasé pour pièce d'horlogerie comprenant des moyens pour commander la marche du moteur par un premier type d'impulsions bipolaires de faible largeur ou par un second type d'impulsions bipolaires de plus grande largeur chacune desdites impulsions du premier et du second type étant separee de sa suivante par un même laps de temps prédéterminé, des moyens pour envoyer au moteur un train dudit second type d'impulsions se substituant aux impulsions du premier type et étant précédé par deux impulsions longues de polarité alternée dont le signe de la première est opposé à celui de la polarite de ladite dernière impulsion du premier type si ledit moteur reçoit une impulsion de polarité telle qu'elle l'empêcherait de progresser d'un pas en réponse audit premier type d'impulsions et des moyens pour mettre le moteur en circuit ouvert, après chaque impulsion du premier type de faible largeur de durée correspondant à un temps $T_1$, pendant un temps $T_3$ au début duquel la tension induite Ui par rotation du rotor, moteur est mesuree aux bornes de la bobine du moteur, qui, si elle est inferieure à une valeur prédéterminée, indique que le moteur doit être alimenté par un train dudit second type d'impulsions.

Un dispositif de commande de ce type est connu. L'expose allemand DE—A—27 45 052 décrit un système de commande qui applique au moteur un signal de faible énergie si la charge du moteur est faible et un signal de grande énergie si la charge du moteur est forte et ceci dans le but de dimineur d'environ 60% la consommation d'énergie de la montre. L'invention citée base la passage du premier signal au second signal sur l'observation de l'allure du courant moteur dont les maxima se déplacent vers la droite quand la charge du moteur augmente. En détectant la position des maxima, il est ainsi possible d'envoyer au moteur une impulsion de commande de grande largeur (par exemple 7,8 ms) lorsque le couple mécanique augmente, ce qui est le cas par exemple au moment du changement de la date du calendrier. Ce système présente l'inconvénient de ne pas être en mesure de connaître quelle est la position qu'occupe le rotor après que lui ait été envoyée une impulsion motrice de faible largeur et il peut se présenter des cas où un train d'impulsions de grande largeur est envoyé au moteur sans nécessité aucune.

D'autres dispositifs de commande ont été proposés qui détectent si le moteur a franchi son pas en réponse à l'impulsion de commande. C'est le cas par exemple des demandes de brevets FR—A—2 384 289 et FR—A—2 388 323 où la configuration du moteur est telle qu'il présente une zone saturable. Dans les demandes citées, une impulsion dite de détection de l'ordre de la milliseconde permet de détecter si le rotor a tourné ou non. Si le pas n'a pas été fait, une impulsion de correction (7,8 ms) est imdiatement envoyée au moteur en remplacement de l'impulsion normale (3,8 ms). Comme déjà mentionné, ce système demande un moteur à zone saturable et présente donc l'inconvénient de n'être pas applicable à tous les moteurs pas à pas connus de l'industrie horlogère. D'autre part, il faut remarquer que la tension de détection passe du simple au double lorsque le moteur fait son pas alors que la présente invention propose un écart beaucoup plus important, ce qui lui confère une meilleure sûeté de fonctionnement, comme cela sera expliqué plus loin.

D'autres systèmes encore sont connus qui utilisent la tension induite ou force contre-électromotrice délivrée par la bobine du moteur pour déterminer, d'une part, si le rotor a franchi son pas et, d'autre part, pour lui conférer une énergie supplémentaire si ce pas n'a pas été franchi.

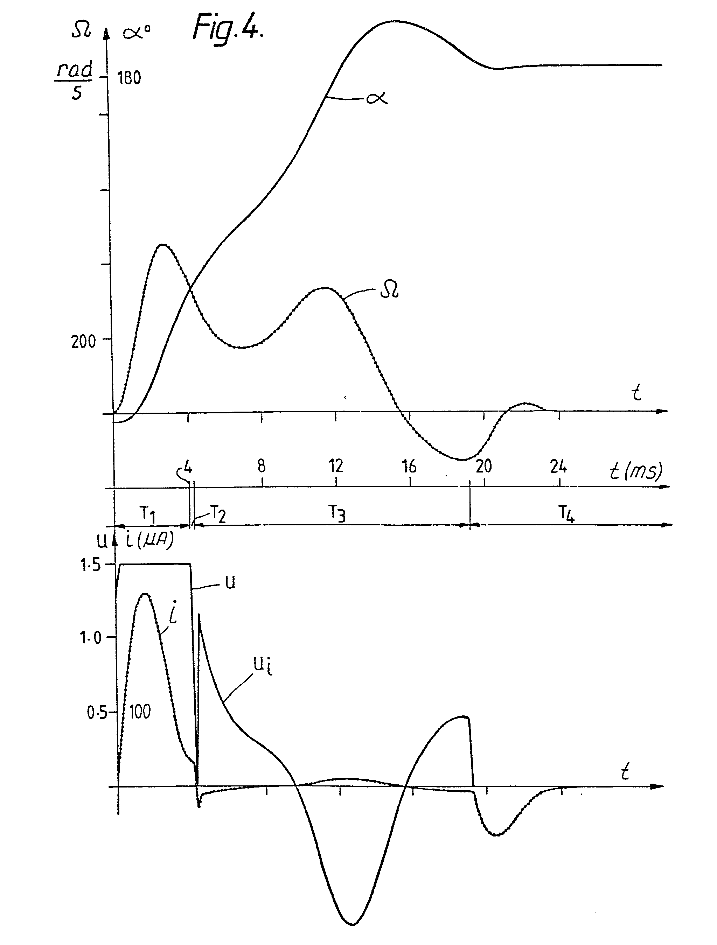

L'exposé d'invention GB—A—2 006 995 décrit comme connu un tel système où la tension induite engendrée par le mouvement du rotor est détectée après chaque impulsion de commande. Si cette tension est faible, on en conclut que le rotor n'a pas fait son pas et on envoie à la bobine du moteur une impulsion de durée plus longue que la normale après laquelle on mesure à nouveau le niveau de la tension induite. Si ce niveau est supérieur à un seuil déterminé, on restitue l'impulsion normale. Comme la tension induite est généralement détectée à un temps déterminé après chaque impulsion de commande, se pose alors la question de fixer ce temps pour qu'il advienne à la fois après l'impulsion normale (courte) et à la fois après l'impulsion de durée plus longue. Un compromis est difficilement réalisable car si ce temps est choici assez long pour ne pas être couvert par l'impulsion longue, la tension détectée après une impulsion courte risque d'être tombée en dessous du seuil critique alors que le rotor a tout de même franchi son pas. Ceci a pour conséquence qu'une impulsion longue est envoyée au moteur sans nécessité (voir tension Ui de la figure 4 du présent exposé). Pour obvier à cet inconvénient, l'exposé d'invention cité propose un arrangement qui fait appel à un circuit particulier utilisant la tension induite produite par le moteur et produisant des impulsions de commande modulées, solution totalement différente de celle qui va être décrite dans la présente invention.

Le brevet US—A—4 158 287 décrit également la commande d'un moteur pas à pas qui est contrôlé par la tension induite délivrée par la bobine du moteur. Ici, comme d'ailleurs dans le cas cité précédemment, et en général dans tous servomécanismes, un signal de sortie est produit quand la tension induite diminue en dessous d'une valeur prédéterminée, ce qui a pour effet d'envoyer au moteur des impulsions de plus grande largeur pour l'aider à vaincre une augmentation de couple.

Dans les deux derniers documents cités, on détecte si le moteur a franchi son pas ou non. Si tel n'est pas la cas, on envoie à la bobine du moteur une impulsion de correction. Ce système pose le problème de l'instant où cette détection doit être faite, comme on l'a dit plus haut, si on ne veut pas risquer une correction inutile. De plus, si la détection se fait autour des positions d'équilibre stables du rotor, comme c'est le cas dans le brevet US—A—4 158 287, la différence d'amplitude entre la tension induite produite si le rotor a fait son pas et celle produite si le rotor n'a pas fait son pas peut être insuffisante pour décider si une correction doit avoir lieu ou non. En effet, si le pas a été franchi, le rotor oscille avec une assez grande amplitude autour de sa nouvelle position avant de s'y fixer. Si le pas n'a pas été franchi, le rotor a été entraîné cependant pendant un instant dans la direction d'avance pour revenir osciller avec une certaine amplitude à sa position primitive avant de s'y fixer. On comprendra donc que si l'augmentation de charge est juste suffisante pour empêcher le pas, l'amplitude de l'oscillation, donc la valeur de la tension induite à la position primitive peut être du même ordre de grandeur que celle existante à la nouvelle position si le rotor a franchi son pas.

Le document GB—A—2 009 464 décrit pour sa part un circuit capable de détecter les conditions de charge du moteur en branchant sa bobine en série avec une résistance élevée qui permet d'évaluer la tension induite Ui existant dans l'enroulement du moteur après la fin de l'impulsion motrice, ledit enroulement étant disposé alors en circuit ouvert. Ce système nécessite l'utilisation d'une résistance de haute valeur et surtout un système de commutation compliqué.

C'est le but de la présente invention d'éliminer les inconvénients ci-dessus et de baser la détection de l'avance du rotor, non en détectant si le rotor a franchi son pas ou si son état de charge a varié, mais de baser cette détection sur la polarité de l'impulsion motrice par rapport à la position du rotor. Ainsi, comme cela sera expliqué en détail plus loin, si le rotor ne progresse pas d'un pas après qui lui ait été envoyée une impulsion motrice de polarité correcte, il recevra, un laps de temps prédéterminé plus tard, une nouvelle impulsion de polarité incorrecte et c'est à partir de ce momentlà que le système entre en fonction, la correction s'opérant en envoyant au moteur deux impulsions alternées rapprochées de longue durée, dont la polarité de la première est inverse par rapport à la polarité de la dernière impulsion incorrecte, lesdites impulsions étant suivies d'un train d'impulsions de grande largeur. On doit constater qu'aucun des documents cités ne décrit une telle disposition.

C'est un autre but de l'invention de proposer un système de commande qui économise l'energie de la source d'alimentation tout en étant très sûr dans son fonctionnement.

Ces buts sont atteints grâce au dispositif tel que revendiqué dans le revendication 1.

L'invention sera mieux comprise à la lumière de la description qui suit et des dessins qui représentent le fonctionnement du moteur et de son dispositif de commande.

La figure 1 est l'organigramme d'une alimentation avec contrôle de position.

La figure 2 représente les divers signaux appliqués au moteur.

Les figures 3a et 3b montrent l'allure des couple mutuel et couple de positionnement du moteur selon que sa bobine reçoit une impulsion correcte d'avance ou une impulsion accidentelle inverse respectivement.

La figure 4 montre la position angulaire $\alpha$, la vitesse angulaire $\Omega$, le courant dans la bobine i et la tension aux bornes de la bobine du moteur si celui-ci reçoit une impulsion correcte d'avance.

La figure 5 montre les mêmes variables qu'en figure 4 si le moteur reçoit une impulsion accidentelle inverse.

La figure 6 montre comment est connecté le moteur par rapport à la tension d'alimentation.

La figure 7 montre un schéma de principe possible pour mettre en oeuvre l'invention.

L'invention qui va être décrite vise à la fois la sécurité de fonctionnement du moteur et la réduction de consommation de la pièce d'horlogerie. On constate en effet qu'un micro-moteur de montre travaille en général pratiquement à vide. Toutefois, pour assurer un bon fonctionnement dans des cas particuliers comme variations de température, champ magnétique extérieur, augmentation de charge, etc., on est obligé de le suralimenter, ce qui conduit à une consommation inutile de l'énergie de la pile. L'invention propose un nouveau dispositif du contrôle de position du rotor du moteur qui permet d'adapter, avec de grandes marges de sécurité, l'alimentation en fonction de la charge, d'où il résulte un gain appréciable sur la consommation d'énergie.

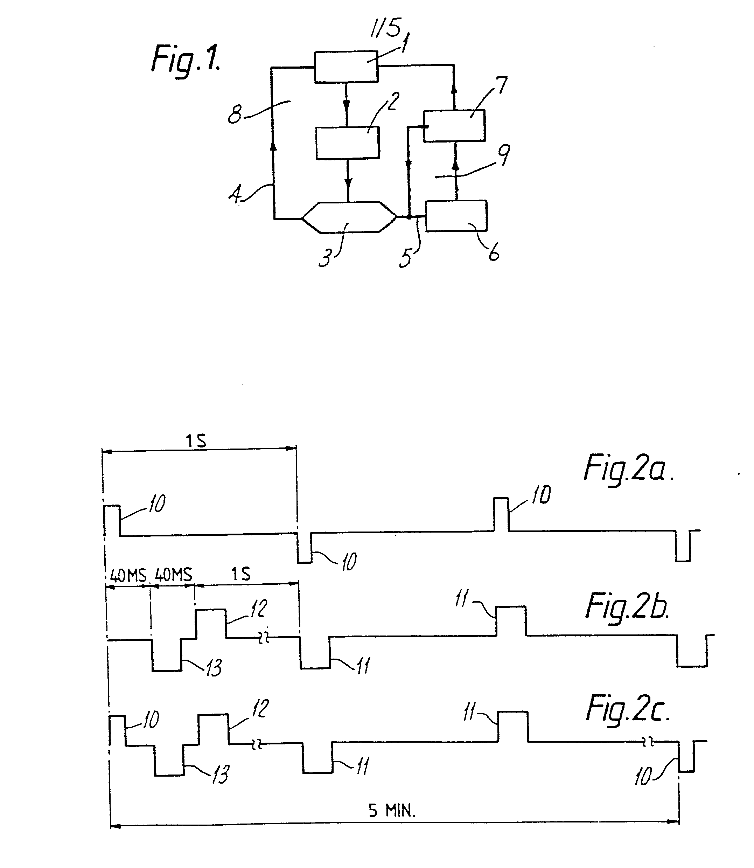

La figure 1 représente le principe général d'alimentation du moteur tel qu'il a déjà été mentionné dans certains brevets cités plus haut et un organigramme d'alimentation avec contrôle de position du rotor. Le moteur est alimenté normalement par des impulsions de courte durée (par exemple 4 ms) émises par un générateur 1. Un détecteur de position 2, objet de la présente invention et qui sera décrit en détail plus loin, permet de contrôler si le rotor du moteur est en condition de recevoir une impulsion de polarité correcte pour poursuivre son avance. Si oui, l'organe de décision 3 fait savoir via la ligne 4 au générateur 1 qu'il doit continuer à alimenter le moteur. Si non, le même organe de décision commande par la ligne 5 le générateur 6 qui émet des impulsions de longue durée (par exemple 6 ms) qui alimentent alors le moteur et se substituent aux impulsions de courte durée. Cette substitution a lieu pendant un temps de n secondes fixé par le compteur 7. Après ce laps de temps, le moteur est de nouveau alimenté par des impulsions de courte durée. On voit que le moteur est alimenté alternativement et suivant les besoins soit par la boucle 8 donnant des impulsions de courte durée, le détecteur étant en fonctionnement, soit par la boucle 9 donnant des impulsions de longue durée pendant un temps déterminé par la compteur, le détecteur étant hors circuit. Les différentes anomalies qui peuvent se présenter lors du fonctionnement dues aux causes dont il a été question plus haut durent un certain temps. On comprendra donc qu'envoyer systématiquement une impulsion longue après chaque impulsion courte trouvant le rotor en mauvaise position pour poursuivre sa course serait dispendieux en énergie consommée et contraire au but que l'invention se propose d'atteindre. La durée pendant laquelle sont envoyées au moteur les impulsions longues est de l'ordre 5 minutes, mais d'autres valeurs pourraient être choisies.

La figure 2a représente le train d'impulsions bipolaires de faible largeur qui est normalement envoyé au moteur. Les impulsions 10 ont une durée de l'ordre de 4 ms et sont émises toutes les secondes par le générateur 1. La figure 2b représente le train d'impulsions longues 11 d'une durée de l'ordre de 6 ms émis par le générateur 6, impulsions se succédant à un rythme de une seconde. Pour des raisons qui seront expliquées plus loin, le train d'impulsions longues est précédé par deux impulsions longues 12 et 13 de polarité alternée et dont les flancs initiaux sont espacés de 40 ms dans le temps; de plus, le circuit est arrangé pour que le début de l'impulsion 13 parvienne aussi 40 ms après le début de l'impulsion 10. Lorsque le détecteur de position décèle l'arrivée d'une impulsion accidentelle inverse, le signal d'alimentation se présente alors comme en figure 2 coûle train d'impulsions longues est envoyé au moteur pendant 5 minutes, après quoi le moteur est commuté à nouveau sur les impulsions courtes 10.

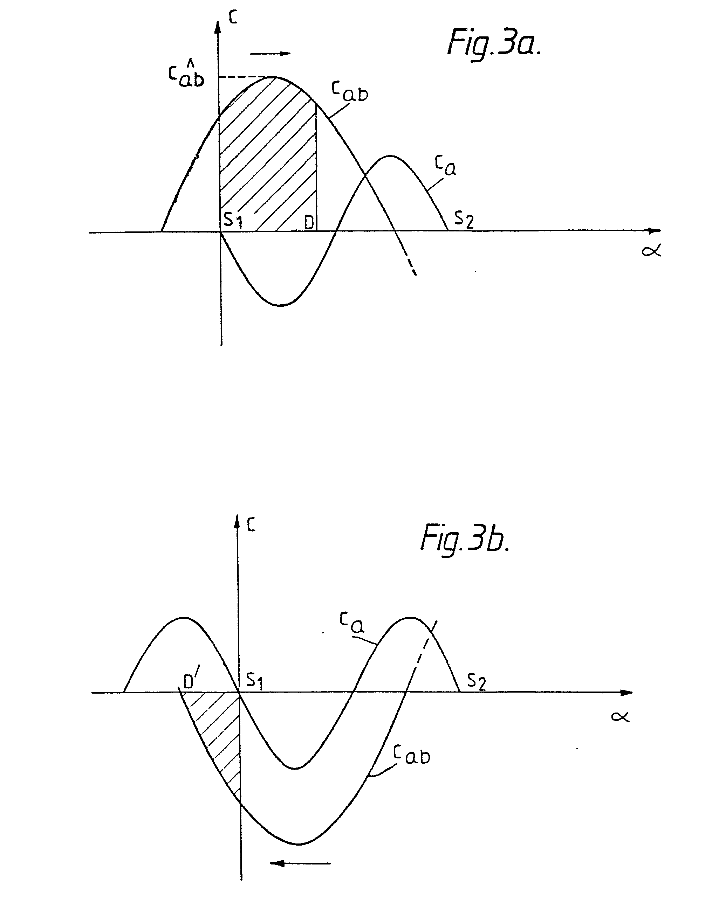

La figure 3a montre la valeur des couples C qui agissent sur le rotor en fonction de son angle de rotation $\alpha$. Comme il est connu, le rotor du moteur pas à pas est soumis à deux sortes de couples: un couple statique de maintien ou couple de positionnement Ca dû à l'aimant seul et un couple dynamique moteur ou couple mutuel aimant — bobine Cab dû à l'interaction du flux de l'aimant avec le flux de la bobine lorsque celle-ci est alimentée. Initialement le rotor est en position $S_1$. Si une impulsion d'avance de polarité correcte est envoyée au moteur, son rotor sera amené de la position d'équilibre stable $S_1$ à la position D à l'aide du couple mutuel Cab créé par ladite impulsion, le reste du parcours (de D à la deuxième position d'équilibre stable $S_2$) s'effectuant grâce à l'énergie cinétique et l'énergie potentielle emmagasinées. Au moment de la coupure de l'impulsion (qui a duré 4 ms dans la version présentée ici), le rotor se trouve au point D et possède une certaine vitesse angulaire $\Omega$ D (dans un premier modèle de moteur à 2 pas par tour, on a mesuré pour $\Omega$ D une vitesse d'environ 400 rad/s et pour un second modéle de moteur à 8 pas par tour, on a mesuré une vitesse d'environ 100 rad/s) et le facteur de couplage défini par Cab/i est à peu près au maximum. Il s'ensuit que si l'on mesure presque immédiatement après la coupure de l'impulsion la tension induite produite par la bobine du moteur, ladite bobine étant à circuit ouvert, on recueille à ses bornes le produit

$$Ui = \Omega \cdot \frac{Cab}{I}.$$

Dans la pratique et suivant le type de moteur, cette tension est de l'ordre de 0,4 à 1,2 volt.

La figure 4 permet de se rendre mieux compte de l'évolution des diverses variables en fonction du temps lorsque le moteur répond à une imulsion dirigée dans le bon ses. L'abcisse des temps est divisée en quatre zones $T_1$ à $T_4$. Pendant le temps $T_1$, le moteur est alimenté par l'impulsion de commande qui permet de lancer son rotor. Pendant le temps $T_3$, le circuit électrique du moteur est ouvert, ce qui permet, d'une part, de mesurer la tension induite de rotation, comme on le verra plus loin, et, d'autre part, d'autoriser son rotor à achever son trajet sans qu'un couple de freinage n'apparaisse dû au courant induit qui apparaîtrait si la bobine était en court-circuit. Pendant le temps $T_4$ qui court à partir de la fin du temps $T_3$ et jusqu'à l'arrivée d'une nouvelle impulsion motrice, la bobine du moteur est court-circuitée, ceci dans le but d'amortir le mouvement du moteur en fin de pas. Dans une variante de l'invention dont il sera question plus loin, on prévoit un temps $T_2$ situé entre les temps $T_1$ et $T_3$ où le moteur est également court-circuité. La courbre $\alpha$ donne la position angulaire du rotor et montre qu'on a affaire à un moteur à deux pas par tour et que la nouvelle position stable (180°) est atteinte après un temps de 20 ms. La courbe $\Omega$ donne la vitesse angulaire du rotor qui presque immédiatement après la coupure de l'impulsion (t après 4 ms) est d'environ 350 rad/s. La courbe U donne la valeur de la tension d'alimentation (1,5 volt) pendant l'impulsion de commande durant le temps $T_1$. Pendant le temps $T_3$, la tension induite aux bornes de la bobine prend l'allure de la courbe Ui. Si l'on mesure cette tension presque immédiatement au début du temps $T_3$ (à $T_3 = 0,2$ ms par exemple), on recueille une tension de grande amplitude de l'ordre de 1 volt. Enfin, la courbe i donne l'évolution du courant dans la bobine, lequel est nul pendant le temps $T_3$ puisque la bobine se trouve dans un circuit ouvert.

On supposera maintenant que pour une raison quelconque (augmentation subite de charge par exemple), le moteur n'a pas fait son pas en réponse à une impulsion correcte d'avance. C'est ce qu'on peut appeler une impulsion accidentelle inverse qui se présente alors aux bornes de la bobine.

La figure 3b illustre cette nouvelle situation où le couple mutuel Cab est à prendre dans le sens inverse en réponse à une impulsion inversée. Avec cette fausse impulsion, le rotor est lancé en arrière et tend à se stabiliser au voisinage du point D'. L'énergie développée par le couple Cab étant insuffisante à vaincre l'énergie de positionnement créée par le couple Ca, le rotor reviendra à son point de départ $S_1$. Au moment de la coupure de l'alimentation, la vitesse angulaire $\Omega$ et le facteur de couplage Cab/i sont sensiblement nuls et partant la tension induite Ui obtenue est pratiquement égale à zéro.

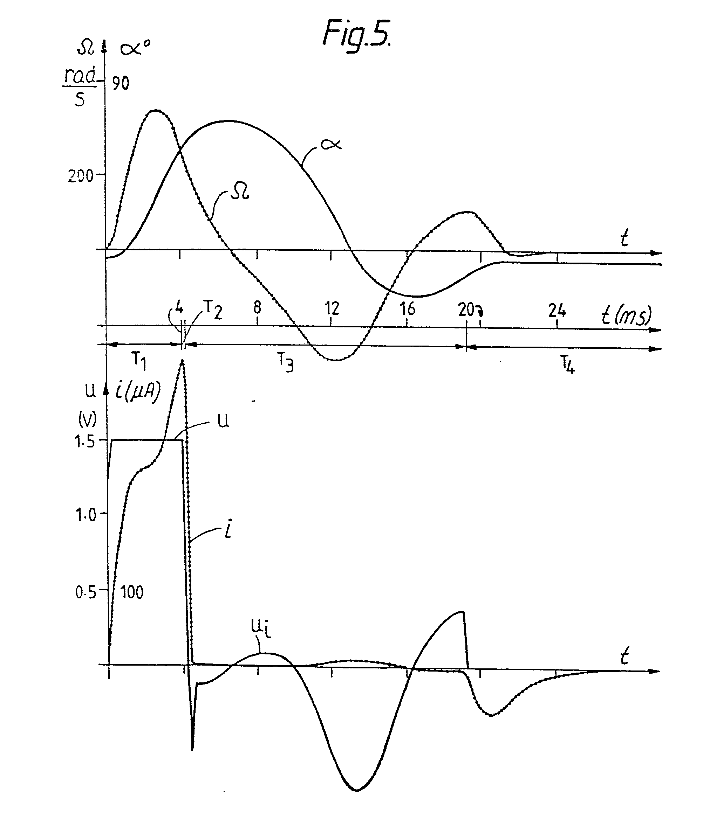

La figure 5 montre l'evolution des diverses variables en fonction du temps lorsque le moteur répond à une impulsion accidentelle inverse ou encore mauvaise impulsion et ceci dans le mêmes conditions de charge que celles de la figure 4. On observera plus particulièrement ici la valeur de la tension induite au début du temps $T_3$. Si on mesure cette tension presque immédiatement au début du temps $T_3$ (à $T_3 = 0,2$ ms par exemple), on recueille une tension négative de petite amplitude de l'ordre de 0,1 volt.

La comparaison des situations présentées par les figures 4 et 5 montre immédiatement que grâce à la mesure de la tension induite Ui recueillie aux bornes de la bobine du moteur on peut détecter si le moteur reçoit une impulsion normale correcte ou au contraire une impulsion inverse incorrecte, la première délivrant une tension de grande amplitude, la seconde une tension voisine de zéro, voire négative. S'agissant d'un moteur à alimentation bipolaire et dans le cas où le moteur reçoit une impulsion correcte d'avance, on suppose qu'il a fait son pas avec l'impulsion précédente et donc qu'il peut continuer à être alimenté par des impulsions de courte durée telles qu'elles sont représentées en figure 2a, Dans le cas contraire où le moteur reçoit une impulsion incorrecte, on peut en déduire que son rotor n'a pas fait le pas avec l'impulsion précédente pas plus d'ailleurs qu'il ne le ferait si une nouvelle impulsion se présentait, cette dernière se présentant également comme incorrecte. Il y a donc lieu de rattraper ces deux pas perdus, ce qui explique la présence en figure 2b de deux impulsions rapprochées de plus longue durée 13 et 12. Dans une variante de l'invention, les flancs initiaux de ces deux impulsions alternées de grande largeur sont espacés de 40 ms, le flanc initial de l'impulsin 13 commençant lui aussi 40 ms après le début de la dernière impulsion de courte durée 10. D'autres temps peuvent être choisis pour situer ces deux impulsions alternées 13 et 12 pourvu qu'elles prennent place entre la dernière impulsion courte 10 et la première impulsion longue 11 qui sont elles-mêmes distantes d'une seconde.

Comme déjà mentionné plus haut, dans une variante d'exécution de l'invention, un temps $T_2$, où la bobine est court-circuitée, est intercalé entre les temps $T_1$ et $T_3$. Ce laps de temps peut être intéressant pour deux raisons: récupérer d'abord l'énergie de self induction $L \cdot i^2/2$ contenue dans le circuit, limiter ensuite la surtension prenant naissance aux bornes de la bobine.

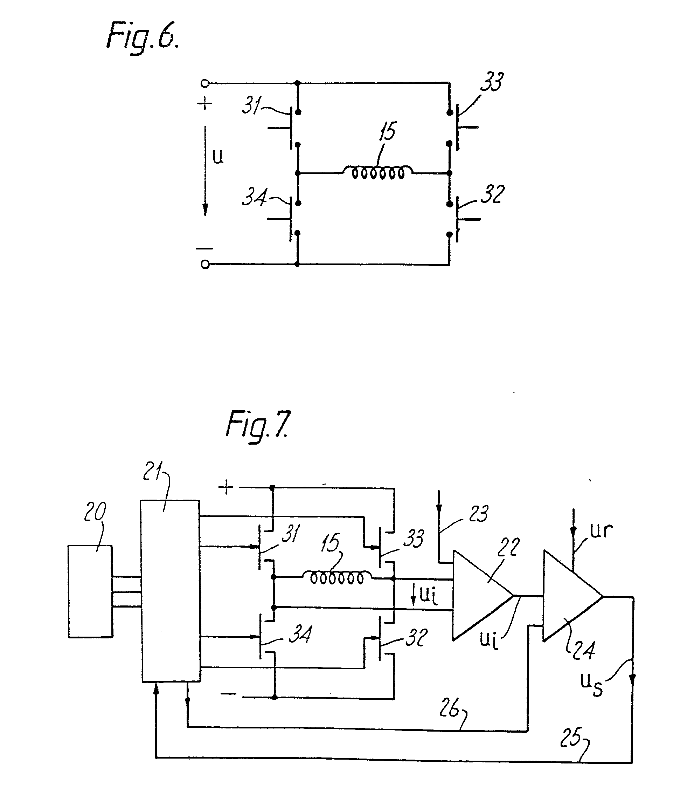

La figure 6 montre comment est connectée la bobine 15 du moteur par rapport à la tension U d'alimentation. Dans ce schéma, le moteur reçoit des impulsions alternées lorsque les interrupteurs 31—32, respectivement 33—34 sont fermés. Les deux tableaux ci-après indiquent la position des interrupteurs 31 à 34 selon les temps $T_1$ à $T_4$ définis plus haut et selon l'invention. La séquence de commande des interrupteurs s'établit donc suivant qu'il s'agit

a) d'une impulsion positive:

| Temps | Interrupteurs | | | |
|---|---|---|---|---|
| | 31 | 32 | 33 | 34 |
| $T_1 (=\ \ \ 4\ \ \ $ ms) | fermé | fermé | ouvert | ouvert |
| $T_2 (=\ \ \ 0,2$ ms) | fermé | ouvert | fermé | ouvert |
| $T_3 (=\ \ 15\ \ \ $ ms) | ouvert | ouvert | ouvert | ouvert |
| $T_4 (= 980,8$ ms) | fermé | ouvert | fermé | ouvert |

b) d'une impulsion négative

| Temps | Interrupteurs | | | |
|---|---|---|---|---|
| | 31 | 32 | 33 | 34 |
| $T_1$ (= 4 ms) | ouvert | ouvert | fermé | fermé |
| $T_2$ (= 0,2 ms) | fermé | ouvert | fermé | ouvert |
| $T_3$ (= 15 ms) | ouvert | ouvert | ouvert | ouvert |
| $T_4$ (= 980,8 ms) | fermé | ouvert | fermé | ouvert |

Il est bien clair que dans les techniques actuelles ce sont des transistors qui jouent le rôle des interrupteurs. De plus, les valeurs des temps $T_1$ à $T_4$ sont indicatives et conviennent pour une certaine construction de moteur. D'autres valeurs pourraient être choisies sans s'écarter pour autant de l'objet de l'invention.

La figure 7 montre un schéma de principe possible pour mettre en oeuvre l'invention.

Les signaux en provenance du circuit diviseur 20 sont appliqués à un circuit de commande 21. Ce circuit comprend le générateur d'impulsions courtes 1, le générateur d'impulsions longues 6 et le compteur 7, tel que cela a été expliqué dans la figure 1. Les électrodes de commande des transistors 31 à 34 sont commandées par les signaux de la figure 2a selon les séquences des deux tableaux ci-dessus ou par les signaux de la figure 2c suivant que l'impulsion de commande est réputée correcte ou non respectivement. La tension recueillie aux bornes de la bobine 15 est connectée à l'entrée d'un circuit 22. Un signal d'horloge 23 provenant du diviseur de fréquence est également connecté à l'entrée du circuit 22. Ce signal, d'une durée de l'ordre de quelques microsecondes, ouvre le circuit 22 après chaque impulsion courte, c'est-à-dire, dans une verstion préférée, de l'invention, environ 0,2 ms après le début du temps $T_3$. Pendant ce court instant, il apparaît donc à la sortie du circuit 22 la tension induite Ui comme cela a été expliqué plus haut et conformément aux figures 4 et 5. La tension Ui est comparée à une tension de référence Ur dans un comparateur 24. Si Ui est plus grand que Ur, c'est une impulsion correcte d'avance qui a été envoyée au moteur et il n'apparaît aucun signal à la sortie du comparateur: le circuit de commande continue à émettre des impulsions de courte durée. Si au contraire Ui est plus petit que Ur, c'est une impulsion accidentelle inverse qui a été envoyée au moteur et il apparaît un signal Us à la sortie du comparateur qui, par la ligne 25, oblige le circuit de commande à émettre un train d'impulsions longues: qui est précédé par deux impulsions longues de polarité alternée dont le signe de la première est oppose à celui de la polarité de ladite impulsion accidentelle comme cela est montré en figure 2c. Pendant le temps où sont émises ces impulsions longues, on bloque le comparateur 24 par la ligne 26.

Des mesures sur modèle ont montré que, en tenant compte des diverses circonstances qui peuvent se présenter, le rapport entre la tension Ui produite par une impulsion correcte et la tension Ui produite par une impulsion incorrecte est très grand. Il résulte de ceci que le système proposé est très sûr même si la tension de référence Ur est choisie dans des limites assez larges simplifiant ainsi la réalisation du comparateur 24.

Enfin, comme déjà mentionné auparavant, le système a pour but important de diminuer la consommation d'énergie de la pièce d'horlogerie et d'y parvenir au moyen de la mesure de la tension induite recueillie aux bornes du moteur, ce dernier étant en circuit ouvert. Le système peut convenir à n'importe quel système de moteur pas à pas. Si ce moteur est dimensionné pour l'asservissement que propose la présente invention, une économie d'énergie de l'ordre de 60% a été mesurée.

**Revendications**

1. Dispositif d'alimentation d'un moteur pas à pas monophasé (15) pour pièce d'horlogerie comprenant des moyens pour commander la marche du moteur par un premier type d'impulsions bipolaires de faible largeur (10) ou par un second type d'impulsions bipolaires de plus grande largeur (11) chacune desdites impulsions du premier et du second type étant séparée de sa suivante par un même laps de temps prédéterminé, des moyens pour envoyer au moteur un train dudit second type d'impulsions se substituant aux impulsions du premier type si ledit moteur reçoit une impulsion de polarité telle qu'elle l'empêcherait de progresser d'un pas en réponse audit premier type d'impulsions et des moyens pour mettre le moteur en circuit ouvert, après chaque impulsion du premier type de faible largeur (10) de durée correspondant à un temps $T_1$, pendant un temps $T_3$ au début duquel la tension induite Ui dudit moteur est mesurée qui, si elle est inférieure à une valeur prédéterminée, indique que le moteur doit être alimenté par un train dudit second type d'impulsions (11), caractérisé par le fait que le dispositif est arrangé de façon telle que ledit train du second type d'impulsions débute après ledit laps de temps prédéterminé qui suit la dernière impulsion de faible largeur (10) n'ayant pas entraîne la progression d'un du moteur deux impulsions alternées (13, 12) de largeur identiques à celles du train du second type d'impulsions étant intercalées entre ladite dernière impulsion (10) et la première impulsion (11) train du second type d'impulsions la première (13) des deux dites impulsions alternées étant de polarité inverse à la polarité de ladite dernière impulsion de faible largeur (10).

2. Dispositif d'alimentation selon la revendication 1, caractérisé par le fait que ledit laps de temps prédéterminé est de une seconde.

3. Dispositif d'alimentation selon la revendication 1, caractérisé par le fait qu'il comprend en outre des moyens pour mettre le moteur en court-circuit pendant un temps $T_2$ situé entre le premier temps $T_1$ et le second temps $T_3$ et pendant un temps $T_4$ situé entre le second temps $T_3$ et l'arrivée de la prochaine impulsion motrice et que la valeur des temps $T_1$ à $T_3$ est comprise dans les fourchettes suivantes: $T_1$ de 2 à 6 ms, $T_2$ et 0,1 à 0,5 ms et $T_3$ de 5 à 18 ms, et que la tension induite Ui est mesurée, 0,1 à 0,3 ms après le début du second temps $T_3$.

4. Dispositif d'alimentation selon la revendication 1, caractérisé par le fait que ladite tension induite Ui est comparée à une tension de référence Ur dans un circuit comparateur (24), la tension de sortie Us dudit comparateur déclenchant l'alimentation du moteur par ledit second type d'impulsions si sa valeur est différente de zéro.

**Patentansprüche**

1. Vorrichtung zum Speisen eines einphasigen Schrittmotors (15) für eine Uhr, mit einer Einrichtung zur Steuerung des Vorrückens des Motors durch eine erste Art bipolarer Impulse geringer Breite (10) oder durch eine zweite Art bipolarer Impulse größerer Breite (11), wobei jeder der genannten Impulse der ersten und der zweiten Art von seinem folgenden durch einen gleichen, vorbestimmten Zeitraum getrennt ist, mit Mitteln um dem Motor einen Zug von Impulsen der zweiten Art zuzuführen, die die Impulse der ersten Art ersetzen, wenn der Motor einen Impuls erhält derartiger Polarität, daß sie ihn hindern würde, als Reaktion auf die genannten Impulse der ersten Art einen Schritt vorzurücken und mit einer Einrichtung um den Motor in Offenschaltung zu bringen, nach jedem bipolaren Impuls der ersten Art geringer Breite (10) einer Dauer entsprechend einer Zeit $T_1$ während einer Zeit $T_3$, zu deren Beginn die induzierte Spannung $U_i$ des Motors gemessen wird, die, wenn sie kleiner als ein vorbestimmter Wert ist, anzeigt, daß der Motor mit einem Zug von Impulsen der zweiten Art (11) gespeist werden muß, dadurch gekennzeichnet, daß die Vorrichtung derart ausgestaltet ist, daß der genannte Zug von Impulsen der zweiten Art nach dem vorbestimmten Zeitraum beginnt, der dem ersten Impuls geringer Breite (10) folgt, der den Motor nicht um einen Schritt vorgerückt hat, daß zwei abwechselnde Impulse (13, 12) gleicher Breite wie diejenigen des Zuges von Impulsen der zweiten Art zwischen dem letzten Impuls (10) und dem ersten Impuls (11) des Zuges von Impulsen der zweiten Art eingeschoben sind und daß der erste Impuls (13) der beiden abwechselnden Impulse entgegengesetzte Polarität zur Polarität des letzten Impulses (10) geringer Breite aufweist.

2. Vorrichtung zum Speisen nach Anspruch 1, dadurch gekennzeichnet, daß der genannte vorbestimmte Zeitraum eine Sekunde beträgt.

3. Vorrichtung zum Speisen nach Anspruch 1, dadurch gekennzeichnet, daß sie außerdem Mittel aufweist um den Motor kurzzuschließen während einer Zeit $T_2$, die zwischen der ersten Zeit $T_1$ und der zweiten Zeit $T_3$ und während einer Zeit $T_4$, die zwischen der zweiten Zeit $T_3$ und der Ankunft des nächsten Antriebsimpulses liegt und daß der Wert der Zeiten $T_1$ bis $T_3$ in den folgenden Bereichen enthalten ist: $T_1$ von 2 bis 6 ms, $T_2$ von 0,1 bis 0,5 ms und $T_3$ von 5 bis 18 ms und daß die induzierte Spannung $U_i$ 0,1 bis 0,3 ms nach dem Beginn der zweiten Zeit $T_3$ gemessen wird.

4. Vorrichtung zum Speisen nach Anspruch 1, dadurch gekennzeichnet, daß die genannte induzierte Spannung $U_i$ mit einer Referenzspannung $U_r$ in einer Vergleichsschaltung (24) verglichen wird, wobei die Ausgangsspannung $U_s$ dieses Vergleichers die Speisung des Motors mit den Impulsen der zweiten Art auslöst, wenn ihr Wert von Null verschieden ist.

**Claims**

1. Feed device for a single phase timepiece stepping motor comprising means to control the operation of the motor by applying thereto either a first type of bipolar pulses of relatively small width (10) or a second type of bipolar pulses of greater width (11), successive pulses whether of the first or second type being separated by the same predetermined time interval, means to apply to the motor a sequence of pulses of the second type which serve as a substitute for pulses of the first type whenever the motor receives a pulse of a polarity to oppose stepping during application of pulses of the first type and means to open circuit the motor, following each pulse of the first type occupying a time period $T_1$, during a time period $T_3$, at the beginning of which voltage Ui induced by the motor is measured, applying said sequence of pulses of the second type (11) to said motor when said induced voltage is less than a predetermined value, characterized in that said feed device is arranged in such a manner that said sequence of pulses of the second type begins following said predetermined time interval after the last pulse (10) of the first type has failed to step the motor, two alternate polarity pulses (13, 12), the width of which is identical to the width of the pulses of the second type, being interposed between said last pulse (10) and the first pulse (11) of said sequence, the first (13) of said two pulses being of a polarity inverted from that of said last pulse (10) of small width.

2. Feed device as set forth in claim 1, characterized in that said predetermined time interval is one second.

3. Feed device as set forth in claim 1, characterized in that it further comprises means to short-circuit the motor during a time period $T_2$ located between the first time period $T_1$ and the second time period $T_3$ and during a time period $T_4$ located between the second time period $T_3$ and the arrival of the next motor pulse and wherein the time periods $T_1$ to $T_3$ lie in the respective ranges $T_1$ 2 ms — 6 ms; $T_2$ 0.1 ms — 0.5 ms; $T_3$ 5 ms — 18 ms and in that the induced motor voltage Ui is measured during a period of 0.1 ms — 0.3 ms following beginning of the second time period $T_3$.

4. Feed device as set forth in claim 1, characterized in that the induced motor voltage Ui is compared with a reference voltage Ur in a comparator circuit (24) the output voltage Us of said comparator starting the feeding of the motor by the second type of pulses if said output voltage is other than zero.

**0 022 270**

Fig.1.

Fig.2a.

Fig.2b.

Fig.2c.

1

Fig.3a.

Fig.3b.

2

**0 022 270**

Fig.4.

# Fig.5.

Fig.6.

Fig.7.